(19)

Europäisches
Patentamt
European
Patent Office
Office européen
des brevets

(11) **EP 2 103 348 A1**

(12) **EUROPEAN PATENT APPLICATION**

(43) Date of publication:
**23.09.2009 Bulletin 2009/39**

(51) Int Cl.:
*B01J 23/889* (2006.01)    *B01J 23/89* (2006.01)
*B01J 35/00* (2006.01)    *B01J 35/04* (2006.01)
*B01D 53/86* (2006.01)    *H01M 8/06* (2006.01)
*C01B 3/58* (2006.01)

(21) Application number: **08102761.7**

(22) Date of filing: **19.03.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicant: **Ford Global Technologies, LLC, A
subsidary of Ford
Motor Company
Dearborn, MI 48126 (US)**

(72) Inventors:
• **Chigapov, Albert
52072 Aachen (DE)**

• **Carberry, Brendan
52074 Aachen (DE)**

(74) Representative: **Drömer, Hans-Carsten
Ford-Werke Aktiengesellschaft
Patentabteilung NH/DRP
Henry-Ford-Strasse 1
50725 Köln (DE)**

Remarks:
Amended claims in accordance with Rule 137(2)
EPC.

(54) **Catalyst system for CO-removal from hydrogen-rich fuel cell feed gas**

(57)    The invention refers to a catalyst system for CO-removal from hydrogen containing fuel cell feed gas comprising at least two locally separated catalyst materials $C_1$ and $C_2$, wherein the first catalyst material $C_1$ shows at a temperature of 100 °C a higher selectivity with respect to CO-oxidation than the second catalyst material $C_2$ and/or the second catalyst material $C_2$ shows at a temperature of 100 °C a higher conversion rate with respect to CO-oxidation than the first catalyst material $C_1$. Preferably $C_1$ is Cu-$MnO_2$ catalyst and $C_2$ is Pt-Co/ alumina catalyst. The invention is further directed to a gas reactor which contains such a catalyst system, a method for carbon monoxide removal from a gas mixture and the use of a catalyst system according to this invention for carbon monoxide removal.

**Fig. 1**

EP 2 103 348 A1

**Description**

The present invention relates to a catalyst system for removal of carbon monoxide (CO) from hydrogen-rich fuel cell feed gas.

The invention basically relates to carbon monoxide elimination from hydrogen-rich gas for fuel cell technology to prevent carbon monoxide poisoning of electrodes, but it can also be applied for other areas where low-temperature carbon monoxide elimination is required. This might be for example automotive applications, air cleaning systems for indoor air quality control, e.g. carbon monoxide removal at ambient temperatures in tunnels, metro, parking areas, garages, submarines, but also for respiratory protection systems. It can be used basically for automotive applications, but is also suitable for stationary applications in industry, like purification of gases for chemical plants, power generation plants and stationary engines, for example for ammonia plants, polymerization reactions of hydrocarbons and for $CO_2$ laser technology processes.

The future directions in the USA and Europe, especially to reduce $CO_2$ emissions from industry promote the development of alternative power sources for engines using hydrogen as a fuel without producing $CO_2$. The best up-to-date and most effective method for hydrogen in-situ production is reforming of alcohols or hydrocarbons, especially methane and diesel fuel, combined with WGSR (water-gas-shift-reaction) and the following power generation in fuel cells.

Fuel cells are intrinsically much more energy efficient and could achieve 70-80% system efficiency (including heat usage) in electrical power plants using solid oxide fuel cells (SOFC), vs. the current efficiency of 30-37% via combustion, and 40-50% efficiency for transportation using proton-exchange membrane fuel cells (PEMFC) or solid oxide fuel cells, vs. the current efficiency of 20-35% with internal combustion (IC) engines. Polymer electrolyte membrane fuel cells (PEMFCs) are compact, having high power density and low temperature operation, but are suffering from the poisoning of electrodes (anode catalysts Pt, Pt-Ru) by carbon monoxide, if carbon monoxide concentration is exceeding 20 ppm limit. It is not possible to completely eliminate carbon monoxide after reforming and WGSR reactions. That is why there is a need to remove carbon monoxide from hydrogen-containing feed-gas mixture.

The most promising method is carbon monoxide oxidation by addition of small amount of oxygen, but highly selective catalyst are required, otherwise a high degree of unwanted $H_2$-oxidation takes place as well. This is undesired as this additional $H_2$-consumption lowers the efficiency of the whole fuel cell system and additionally, the $H_2$-oxidation on the catalyst intended for CO-removal leads to temperature rise on this catalyst which may damage the catalyst and the higher temperature facilitates hydrogen oxidation, as the result the complete CO removal is not possible or require a big excess of oxygen.

Carbon monoxide-removing catalysts for fuel-cell applications are known in the state of the art.

All of them are catalytically active at least with respect to the reactions

$$CO + ½\,O_2 \rightarrow CO_2 \qquad (1)$$

and

$$H_2 + ½\,O_2 \rightarrow H_2O \qquad (2),$$

but to a different extent. Equation (1) reflects the desired reaction, which a catalyst should accelerate, whereas equation (2) is the hydrogen oxidation, which is an undesired side reaction in the CO-removing step to clean hydrogen fuel cell feed gas from the catalyst poison carbon monoxide. This side reaction is unwanted, as it leads to hydrogen consumption which therefore cannot be transformed into energy by the fuel cell and also because the hydrogen oxidation is an exothermic reaction which might lead to local overheating of the catalyst.

Different types of catalysts are proposed by the state of the art.

WO2007106664 A2 describes a gold based catalytic system that is able to reduce the carbon monoxide-content of hydrogen fuel-cell feed gas. Systems of that type however typically show low thermal stability and low stability under reaction conditions with gradual catalyst deactivation. An additional drawback is that these formulations also seem to be sensitive to moisture and $CO_2$.

Copper-based catalysts like $Cu-CeO_2$ are also known to be suitable for the elimination of CO from hydrogen-rich fuel-cell feed gas. However, catalysts of this type have slow reaction rates and cannot completely oxidize CO at low temperatures like below 150 °C, especially if the feed gas has low $O_2$:CO-ratios like < 1.0. The $O_2$:CO-ratio is defined here according to the equation

$$\lambda = O_2 / CO \qquad (3)$$

...

in which $O_2$ and CO are corresponding concentrations in the gas mixture before contact with the catalyst system.

Another type of catalyst is based on platinum or platinum group metals (PGM), alloyed with Cobalt and Iron as described in WO2006130574. These catalysts have high conversion rates at relatively low operation temperatures, but their selectivity with regard to carbon monoxide oxidation is quite poor. This leads to the unwanted side reaction of $H_2$-oxidation. Due to this reason, these catalysts have to be operated with a hydrogen fuel-cell feed gas that contains a relatively high amount of oxygen with $O_2$:CO-ratios of $\lambda > 1.5$ or 2.0 to compensate the oxygen consumption by the side reaction as described by equation (2) and thus to ensure that the carbon monoxide concentration can be lowered beyond the limit of 20 ppm to prevent the poisoning of fuel-cell anode catalyst.

A further drawback of PGM-based catalysts might be seen in the fact that complete carbon monoxide removal is only effective within a temperature window which is too narrow for practical operations of fuel cells, where complete carbon monoxide removal from 50 up to 200 °C at different space velocities is required.

This is in particular important for automotive fuel cell applications due to the rapid change and high variety of temperatures and flows.

As a consequence, known catalysts either show sufficient activity at moderate temperatures but poor or lack of selectivity with respect to carbon monoxide oxidation/ removal according to equation (1), or the catalysts have comparatively high selectivity but low acceleration effects on the carbon monoxide oxidation.

The problem to be solved by the current invention is to create a catalyst that shows good selectivity combined with high carbon monoxide oxidation rates in an atmosphere with small oxygen concentrations. In addition to that, the catalyst should be resistant to higher temperatures and corrosion and should be effective over a wide temperature range of fuel-cell operation modes.

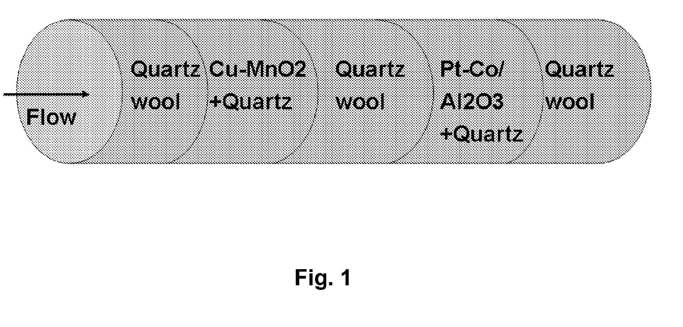

This problem is solved by a catalytic system which is composed of at least two different catalysts which are consecutively combined to a catalyst system. One of the catalysts has a high selectivity with respect to carbon monoxide oxidation whereas the second catalyst, located downstream has a lower selectivity but high activity. Those two catalysts are not mixed but combined to a binary catalytic system, as shown on Figure 1.

The advantage of such a catalyst system is that the catalyst cannot only be operated at lower temperatures but also within a wider temperature window from even below 80°C to more than 220 °C with high conversion rates and higher selectivity with respect to carbon monoxide oxidation. In addition, such a system can operate with a lower amount of oxygen for carbon monoxide oxidation, thus minimising hydrogen oxidation. This is not possible with the catalysts known from the state of the art.

A first embodiment of the current invention is therefore a catalytic system suitable for carbon monoxide removal from hydrogen and oxygen containing fuel cell feed gas comprising at least two locally separated catalyst materials $C_1$ and $C_2$, wherein the first catalyst material $C_1$ shows at a temperature of 100 °C a higher selectivity with respect to carbon monoxide oxidation than the second catalyst material $C_2$ and/or the second downstream catalyst material $C_2$ shows at a temperature of 100 °C a higher conversion rate with respect to carbon monoxide oxidation than the first catalyst material $C_1$.

The conversion rate with respect to carbon monoxide oxidation is measured and calculated according to the equation

$$X_{CO} = (CO_{in} - CO_{out})/CO_{in} \times 100\% \qquad (4)$$

wherein $CO_{in}$ and $CO_{out}$ are inlet and outlet carbon monoxide concentrations before contact with catalyst system ($CO_{in}$) and after contact with the catalyst system ($CO_{out}$).

The conversion rate of oxygen is calculated according to the equation

$$X_{O2} = (O_{2\,in} - O_{2\,out})/O_{2\,in} \times 100\% \qquad (5)$$

wherein $O_{2\,in}$ and $O_{2\,out}$ are inlet and outlet oxygen concentrations before contact with catalyst system ($O_{2\,in}$) and after contact with the catalyst system ($O_2$ out).

The selectivity with respect to carbon monoxide oxidation is calculated according to the equation

$$S = 2\,X_{CO}/X_{O2} \times 100\% \qquad (6).$$

Preferably, the first catalyst material $C_1$ shows at an oxygen:carbon monoxide ratio of $\lambda$=1.5 a higher selectivity with respect to carbon monoxide oxidation than the second catalyst material $C_2$ and/or the second catalyst material $C_2$ shows at an oxygen : carbon monoxide ratio of $\lambda$=1.5 a higher conversion rate with respect to carbon monoxide oxidation than the first catalyst material $C_1$. Under these circumstances, conversion rate and selectivity of the catalyst materials can be compared well in respect to real working conditions of a hydrogen fuel cell.

According to a preferred embodiment of the catalyst system, the first catalyst material $C_1$ contains a mixture of copper and an oxide from a first metal $Me^1$, wherein $Me^1$ is selected from the group consisting of Mn, Ce, Zr, Al, Si, Sn, Ti, Zn, Fe, Co, Ni or mixtures thereof. $Cu-MnO_2$ and $Cu-CeO_2$ are preferred, because these catalysts increase the overall selectivity of the catalyst system according to the current invention.

According to a further preferred embodiment of the catalyst system, the second catalyst material $C_2$ contains a mixture of platinum and a second metal $Me^2$, whereas $Me^2$ is selected from the group consisting of Fe, Ru, Co, Rh, Ir, Ni and Pd or mixtures thereof. It is preferred that the metal $Me^2$ is cobalt, iron or a mixture of cobalt and iron, revealing Pt-Co, Pt-Fe and Pt-Co-Fe as preferred catalyst materials for $C_2$. These catalyst materials are preferred, because those compositions show the best overall results in a catalytic system according to the invention, especially with respect to reaction velocity even at low $O_2$:CO-ratios of $\lambda$=< 1.0.

With respect to the catalyst system according to the current invention, a binary catalyst system is preferred, i.e. a catalyst system consisting of one first catalytic material with high selectivity to CO-oxidation and one second catalytic material with high reactivity according to CO-oxidation. A combination of $Cu-MnO_2$ as $C_1$ with Pt-Co as $C_2$ is especially preferred.

The catalysts according to this invention can be deposited on a catalyst support. The material of the support structure is in principle not subject to any restrictions and includes silica, zirconium dioxide ($ZrO_2$), zirconium phosphate, alumina, cerium oxide ($CeO_2$) and mixtures thereof.

According to a preferred embodiment of the catalyst system, the catalyst material $C_1$ is located upstream of the catalyst material $C_2$ with respect to the flow direction of the gas. This arrangement is preferred if the gas mixture, from which carbon monoxide is to be removed flows over or through the catalyst system. For this purpose, the catalyst system can be implemented into a tube-like structure using a stationary bed catalyst that works as reactor for carbon monoxide removal. The reactor has an inlet channel through which the untreated feed gas mixture enters the reactor and an outlet channel through which the gas mixture leaves the reactor in direction to a hydrogen fuel cell for example.

This arrangement is preferred as under these circumstances, the highest synergistic effect of using two different types of catalysts separated from each other is observed with respect to selectivity and reactivity. Comparative tests with mixtures of these catalysts, i.e. a mixture of $C_1$ and $C_2$ on the same substrate revealed practically no improvement in comparison to the single catalysts.

It is further preferred to deposit the catalysts on a monolith honeycomb structure as substrate to provide low back pressure and convenient carbon monoxide oxidation under fuel cell conditions. These structures can be integrated into a gas reactor and can be installed before the fuel cell inlet and after the water-gas shift reaction section or can be integrated into a fuel cell.

A further embodiment of the current invention is a gas reactor for oxidizing carbon monoxide comprising a catalyst system according to the current invention. The gas reactor can be realized as tube-like structure, with an inlet and an outlet channel. The outlet channel can be connected to the feed-gas inlet of a hydrogen fuel cell. With such an arrangement, a fuel cell can be operated continuously while protecting the catalyst material of the fuel cell from being poisoned by carbon monoxide, which is continuously removed from the feed gas mixture by the gas reactor according to the current invention.

Another embodiment of the current invention is a method for carbon monoxide removal from a gas mixture in which the gas mixture is brought into contact with a catalyst system or a reactor according to this invention. This method is carried out in such a way that the gas mixture, from which carbon monoxide is to be removed, is brought into contact at least with two different catalysts after one another. Preferably, the gas is contacted first with a catalyst which shows high selectivity with respect to carbon monoxide oxidation and then consecutively with a second catalyst which has a high activity according to carbon monoxide oxidation. The gas mixture can flow continuously over or through the catalyst system or the reactor, respectively.

If complete removal of carbon monoxide shall be obtained, the gas mixture needs to contain oxygen at least in an amount which is higher or equal to half of the carbon monoxide concentration, i.e. $\lambda$=0.5. Good results can be obtained, if the $O_2$:CO-ratio of the fuel cell feed gas is from 2.0 to 0.5, especially from 1.5 to 0.7. Values for $\lambda$ between 1.0 and 0.7 are mostly preferred because a hydrogen fuel cell feed gas mixture with such $O_2$:CO-ratios can be effectively cleaned from carbon monoxide while consuming only very little hydrogen at the same time.

In a preferred embodiment of the current method, the catalyst system temperature is kept in a range from 80 to 220°C, especially from 100 to 200°C. This is practically realized by typical means like heating or cooling which is controlled with the help of a thermo-couple. Typically hot feed gas having a temperature of 220-270°C can be obtained after WGSR reactor which than enters the working fuel cell. The operating temperature of a fuel cell is typically 80-120°C.

This temperature range is preferred as the catalyst system according to this invention is capable to be operated within this broad temperature range to almost completely remove carbon monoxide from fuel cell feed gas. This broad temperature range is of great importance, as the catalyst system according to the current invention can be used for practical operations of fuel cells like automotive fuel cell applications. Under these real operation conditions, the system can ensure complete carbon monoxide removal over such a broad temperature range with different space velocities which is required due to the rapid change and high variety of temperatures and flow rates of the fuel cell feed gas, especially in automotive applications.

According to another embodiment of the current method, the space velocity of the gas is lower for the first catalyst material $C_1$ than for the second catalyst material $C_2$. This can be realized using higher catalyst loading and respectively higher length of catalyst layer for $C_1$ than for $C_2$. So as the $C_1$ is low-cost copper-based catalyst while $C_2$ is containing expensive Pt, it does not increase practically the cost of the system to purify hydrogen-rich gas. Typical loading was 140 mg of $C_1$ and only 15 mg of $C_2$ for standard fuel cell having PEMFC polymeric membrane of 25 cm$^2$ and producing current 0.3 A/cm$^2$

Lower space velocities in the part of the catalyst system $C_1$ increase the overall selectivity of the catalyst system proportionally.

Another embodiment of the current invention is the use of a catalyst system or a reactor according to this invention for carbon monoxide removal from a gas mixture which contains carbon monoxide and oxygen. As already mentioned above, the catalyst system according to this invention cannot only be used to clean hydrogen fuel cell feed gas from carbon monoxide but also is also suitable for other applications, in which CO-containing gas mixtures have to be cleaned from carbon monoxide.

The invention is described in greater detail hereinafter by means of preferred embodiments by way of example and with reference to the accompanying Figures.

EXAMPLES

Preparation of Pt-Co catalyst on alumina

The high-surface area alumina was supplied from Alfa Aesar. The surface area was ca 255 m$^2$/g after preliminary calcinations at T=750 °C. The alumina support was then impregnated with a hot solution (85 °C) containing tetraamineplatinum (II) nitrate, cobalt nitrate and tartaric acid using so-called "wetness impregnation". Tartaric acid was added in a slight excess (1.2 of stoichiometric molar ratio of tartatic acid/Pt+Co). Pt loading was selected as 5 wt%, and Co loading was 1.5 wt% accordingly. The samples were dried at 77 °C in drying box overnight and then were finally calcined at 550 °C for 2 hours in the air.

Cu-MnO$_2$ catalyst preparation

The preparation procedure contains three steps, namely:

1) Co-precipitation of copper and manganese mixed oxide from the mixture of manganese (II) nitrate and copper nitrate (2/1 molar ratio Mn/Cu) using excess of potassium carbonate as a precipitation agent at room temperature with the following stirring. 45 g (total) of copper and manganese nitrates were dissolved in 200 ml of distilled water and added drop wise to the solution containing excess of precipitating agent in 300 ml of distilled water under intensive stirring. Then the sample was dried at 100 °C and calcinated at 200 °C overnight and finally at 350 °C for 2h.

2) To create a highly porous MnO$_2$, Cu was then removed from mixed oxide by big excess of 35% nitric acid at room temperature for 1 day under stirring with the following decantation and washing with distilled water on filter, with final drying at room temperature. Typically, 50 ml of nitric acid was used twice diluted with distilled water before the treatment. The surface area of MnO$_2$ prepared by this method- was 220 m$^2$/g. The steps 1 and 2 can be described by the following scheme:

$$Cu^{+2}, Mn^{+2}+CO_3^{-2 (deposition)} \rightarrow (Cu, Mn)\ CO_3\downarrow^{-)} \rightarrow CU\text{-}MnO_2^{(calcinations)} \rightarrow MnO_2^{(HNO_3)}$$

3) Reinsertion of smaller amounts of copper (5-15 mol%) to the solid MnO$_2$ obtained by steps 1 and 2, by wetness impregnation with copper nitrate solution with the following drying at 100 °C and final calcination at 350 °C for two hours. For wetness impregnation, the designated amount of copper nitrate was dissolved in a minimal amount of distilled water (1.5 - 2 ml) to get a required copper loading of 10%.

TESTING

All catalysts were tested in a laboratory-scale packed-bed flow reactor made from a 1 cm ID x 5 cm L quartz tube. An electric furnace was used to heating the reactor. The temperature was monitored by a thermocouple placed in the centre of the catalyst bed.

A powdered catalyst sample with catalyst loading of 10-500 mg depending on catalyst density was diluted with $1 cm^3$ quartz sand, then was inserted into the reactor and exposed to feed gas mixtures comprising the following gases: 0.6 vol.-% CO, varied content of 0.43- 0.9 vol.-% $O_2$, 27 vol.-% $H_2O$, 15.5 vol.-% $CO_2$, 55 vol.-% $H_2$, $N_2$-balance (methane reforming gas mixture after WGSR) for selective carbon monoxide oxidation in the presence of hydrogen for fuel cell applications. A conventional flow setup was used for gas mixture preparation.

All gases were of ultra high purity. Humidifier was installed to provide accurate water concentration in the gas line. The flow rates were controlled using mass flow controllers (MKS, Munich, Germany). To prevent water condensation, all connection lines for PROX study were installed in a thermal box maintaining constant temperature of 85 °C. Reactor effluents were analyzed with a HP 6890A gas chromatograph, using Porapak Q and NaX capillary columns.

Before testing, Pt-Co catalysts were reduced in the reaction mixture at 165 °C for 15 minutes with the following cooling.

The scheme of reactor with binary catalyst is presented on Figure 1.

Typically, 0.015g of Pt-Co/$Al_2O_3$ catalyst was diluted with quartz sand (0.2 mm fraction) to 1 ml volume. For Cu-$MnO_2$, 0.14g of catalyst was mixed with quartz sand.

BET SURFACE AREA EVALUATION

BET surface areas were measured by $N_2$ adsorption at 77K using Micromeritics 2010 ASAP instrument.

XRD ANALYSIS

XRD study was carried out using DRON 4 diffract meter with Cu K$\alpha$ radiation. XRD patterns were recorded in the ranges of 1-7° (2θ) with a step of 0.04° (2θ).

In the figures show

Fig. 1:      a scheme of binary catalyst installation in a reactor;
Fig. 2a:    the activity of different catalysts in an atmosphere with λ=1.5 (ratio $O_2$/CO)
Fig. 2b:    the selectivity to carbon monoxide oxidation of different catalysts in an atmosphere with λ=1.5 (ratio $O_2$/CO)
Fig. 3a:    the activity of different catalysts in an atmosphere with λ=1.0 (ratio $O_2$/CO)
Fig. 3b:    the selectivity to carbon monoxide oxidation of different catalysts in an atmosphere with λ=1.0 (ratio $O_2$/CO)
Fig. 4a:    the activity of different catalysts in an atmosphere with λ=0.7 (ratio $O_2$/CO)
Fig. 4b:    the selectivity to carbon monoxide oxidation of different catalysts in an atmosphere with λ=0.7 (ratio $O_2$/CO)

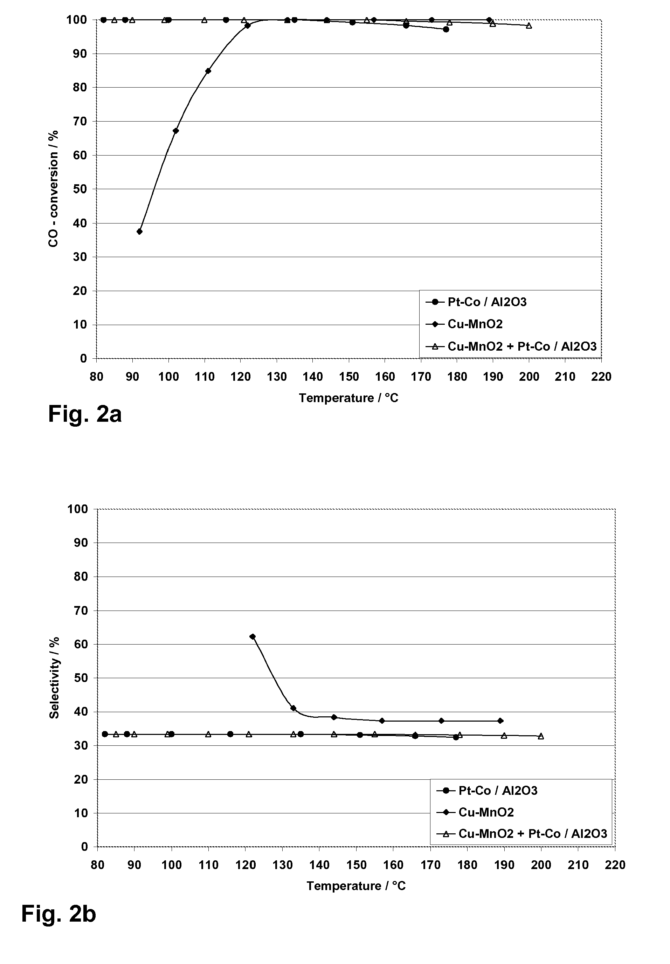

The figures 2a to 4b present the performance of a binary catalyst system with the catalyst of higher selectivity upstream of the catalyst with higher activity in comparison to single catalysts. The reaction has been carried out under the same conditions except for oxygen concentration, which varied from 0.42 to 0.9 vol% with λ value varied from 0.7 to 1.5 correspondingly. The space velocity was maintained constant 15000 $h^{-1}$ for Cu-$MnO_2$ single catalyst; 100000 $h^{-1}$ for Pt-Co/alumina catalyst and for the binary catalyst according to the current invention 17000 $h^{-1}$ for the Cu-$MnO_2$ part and 100000 $h^{-1}$ for Pt-Co/alumina part, so the overall space velocity was 15000 $h^{-1}$ for binary catalyst to be comparable to the Cu-$MnO_2$ single catalyst.

Figure 2a displays the activity and Figure 2b the carbon monoxide selectivity of a binary catalyst (Cu-$MnO_2$ + Pt-Co/alumina) according to the invention in comparison to the individual Cu-$MnO_2$ and Pt-Co-alumina catalysts in selective carbon monoxide oxidation using λ= 1.5 (ratio $O_2$/CO).

The reaction mixture used consists of 0.6 vol.-%CO, 0.9 vol.-%$O_2$, 27 vol.-%$H_2O$, 15.5 vol.-%$CO_2$, 55 vol.-%$H_2$, $N_2$- balance to 100 vol.-%. The space velocity SV= 15 000 $h^{-1}$ for Cu-$MnO_2$ catalyst (0.15 g), SV=100 000 $h^{-1}$ for Pt-Co/alumina catalyst (0.014g) and SV=15000 $h^{-1}$ for the binary catalyst according to the current invention (SV=17 000 $h^{-1}$ for Cu-$MnO_2$ part and SV=100 000 $h^{-1}$ for Pt-Co/alumina part).

As presented in Figure 2, in which case the reaction is carried out using the big excess of oxygen, the performance of single Pt-Co/alumina catalyst is close to that of the binary catalyst system according to the invention, both reaching complete carbon monoxide removal already at 80°C. Under these conditions of relatively high oxygen content with λ=1.5, the selectivity of carbon monoxide oxidation is near equal for both catalysts.

However, the binary catalyst system shows a wider temperature window of complete carbon monoxide elimination up to 180 °C, while for single Pt-Co/alumina catalyst, carbon monoxide removal decreases already at temperatures above 150 °C. Cu-MnO$_2$ single catalyst reaches complete carbon monoxide removal only at 130 °C whereas carbon monoxide selectivity is significantly higher until this temperature is reached.

Summarizing, Pt-Co/alumina single catalyst can cope with carbon monoxide elimination under fuel cell conditions using the big excess of oxygen in comparison to the carbon monoxide concentration. However, the selectivity of carbon monoxide oxidation is only 33% which means that for each eliminated carbon monoxide molecule two molecules of hydrogen were also oxidized. Cu-MnO$_2$ shows effective carbon monoxide elimination only at temperatures above 130 °C. The binary catalyst system according to the current invention shows over a wide temperature range complete carbon monoxide oxidation.

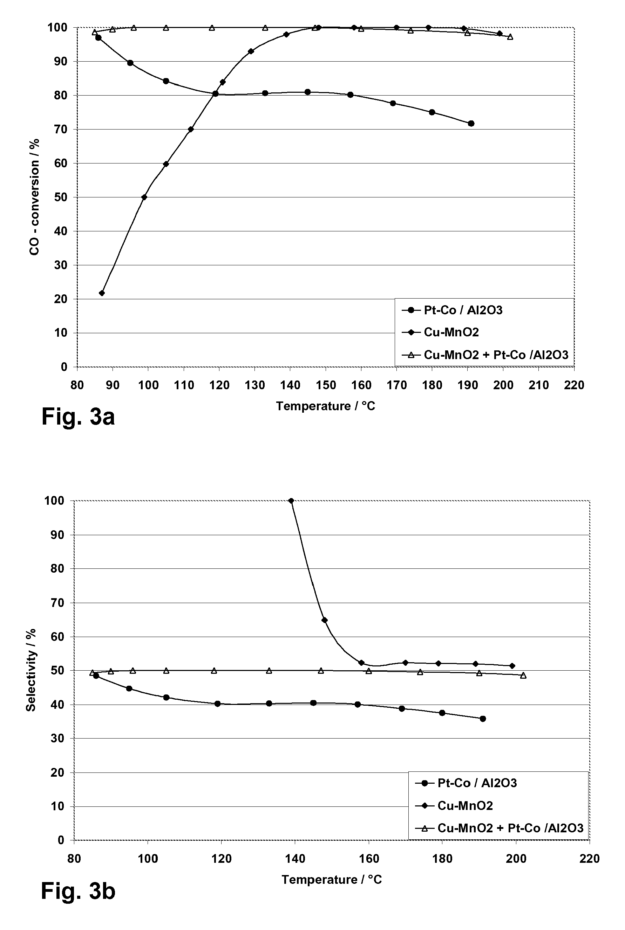

Figure 3a displays the activity and Figure 3b the carbon monoxide selectivity of a binary catalyst (Cu-MnO$_2$ + Pt-Co/alumina) according to the invention in comparison to the individual Cu-MnO$_2$ and Pt-Co-alumina catalysts in selective carbon monoxide oxidation using λ= 1.0.

The reaction mixture used consists of 0.6 vol.-%CO, 0.6 vol.-%O$_2$, 27 vol.-%H$_2$O, 15.5 vol.-%CO$_2$, 55 vol.-%H$_2$, N$_2$- balance to 100 vol.-%. The space velocity SV= 15 000 h$^{-1}$ for Cu-MnO$_2$ catalyst (0.15 g), SV=100 000 h$^{-1}$ for Pt-Co/alumina catalyst (0.014g) and SV=15000 h$^{-1}$ for the binary catalyst according to the invention (SV=17 000 h$^{-1}$ for Cu-MnO$_2$ part and SV=100 000 h$^{-1}$ for Pt-Co/alumina part).

With lower oxygen content in comparison to the carbon monoxide concentration presented on Figures 2, the better performance of the catalyst system according to the current invention becomes more obvious. As displayed in Figure 3, which represents the catalyst performance in an atmosphere with a lower amount of oxygen with λ = 1, the Pt-Co /alumina single catalyst does not provide complete carbon monoxide elimination at all temperatures due to the low selectivity of carbon monoxide oxidation.

Cu-MnO$_2$ single catalyst shows complete carbon monoxide removal only at rather high temperatures of 150-190 °C. In contrast to single oxide catalysts, the binary catalyst reveals wide temperature window of complete carbon monoxide removal under these conditions, from near 95 °C up to 180 °C. The selectivity of CO oxidation is significantly higher for binary catalyst than for Pt-Co/alumina catalyst.

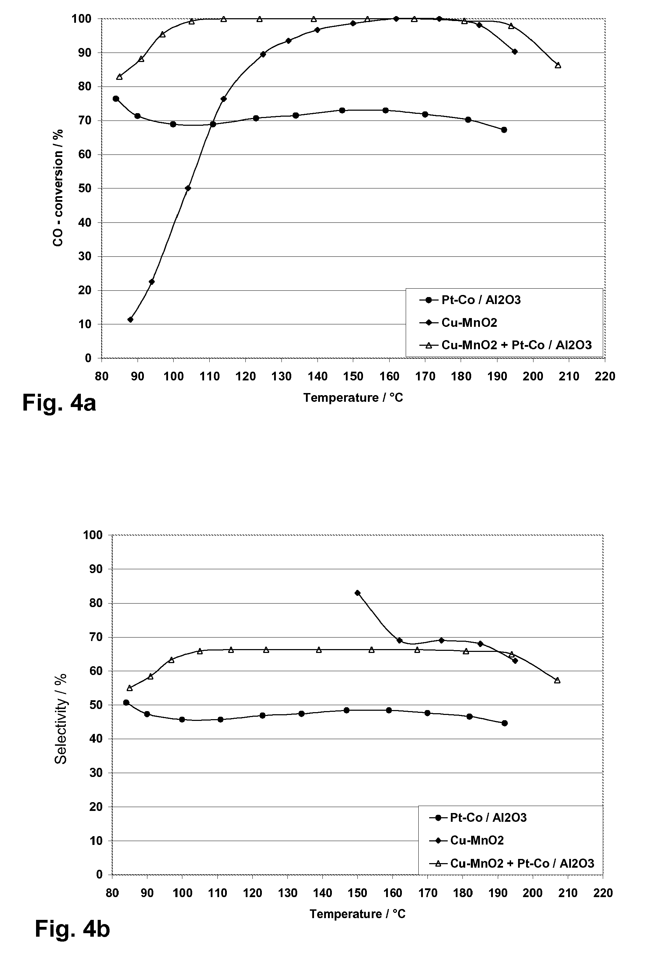

Figure 4a displays the activity and Figure 4b the carbon monoxide selectivity of a binary catalyst (Cu-MnO$_2$ + Pt-Co/alumina) according to the invention in comparison to the individual Cu-MnO$_2$ and Pt-Co-alumina catalysts in selective carbon monoxide oxidation using λ= 0.7 (ratio O$_2$/CO).

The reaction mixture used consists of 0.6 vol.-%CO, 0.42 vol.-%O$_2$, 27 vol.-%H$_2$O, 15.5 vol.-%CO$_2$, 55 vol.-%H$_2$, N$_2$- balance to 100 vol.-%. The space velocity SV= 15 000 h$^{-1}$ for Cu-MnO$_2$ catalyst (0.15 g), SV=100 000 h$^{-1}$ for Pt-Co/alumina catalyst (0.014g) and SV=15000 h$^{-1}$ for the binary catalyst according to the invention (SV=17 000 h$^{-1}$ for Cu-MnO$_2$ part and SV=100 000 h$^{-1}$ for Pt-Co/alumina part).

In figure 4 the results with the lowest O$_2$ to CO-ratio of λ=0.7 are presented. With a Pt-Co/alumina single catalyst is not possible to remove more than 70% of carbon monoxide under these conditions, Cu-MnO$_2$ single catalyst hardly reaches complete carbon monoxide removal only at very high 165 °C-170 °C, while binary catalyst still provides a wide temperature window of complete carbon monoxide removal under these conditions over the whole range from 105 °C to 180 °C.

Summarizing, the binary catalyst, which is including Cu-MnO$_2$ catalyst placed upstream of Pt-Co/alumina catalyst with respect to the flow direction of the gas mixture reveals superior properties with respect to conversion rates and selectivity of carbon monoxide oxidation relative to single corresponding catalysts Cu-MnO$_2$ and Pt-Co/alumina.

The catalyst systems according to the current invention always show a wide temperature range of complete carbon monoxide removal under real fuel cell operation conditions. The advantages over the single type catalysts become more pronounced with decreasing oxygen concentration and λ (ratio O$_2$/CO), i.e. conditions that are highly appreciated as under these conditions less hydrogen is oxidized due to side reactions as presented in equation (2).

The catalyst systems according to this invention open the opportunity to carry out selective carbon monoxide oxidation in the presence of hydrogen to protect the fuel cell catalysts from carbon monoxide poisoning with minimal excess of oxygen and minimal hydrogen consumption. The further advantage of the current system is that it can be operated over a wide temperature range in which complete carbon monoxide removal can be maintained.

The reason of such synergy between two locally separated catalysts, especially in the order that the more selective catalyst C$_1$ (especially Cu-MnO$_2$) is positioned upstream from the higher active catalyst C$_2$ (especially Pt-Co) is not yet completely clear and requires further investigation. A possible explanation might be that due to the first contact of the gas mixture with the more selective catalyst C$_1$, this catalyst is oxidizing part of carbon monoxide with some oxygen consumption creating more favourable conditions for the second, more active catalyst C$_2$.

**Claims**

1. A catalyst system for carbon monoxide removal from hydrogen containing fuel cell feed gas comprising at least two locally separated catalyst materials C$_1$ and C$_2$,

wherein the first catalyst material $C_1$ shows at a temperature of 100 °C a higher selectivity with respect to carbon monoxide oxidation than the second catalyst material $C_2$ and/or
the second catalyst material $C_2$ shows at a temperature of 100 °C a higher conversion rate with respect to carbon monoxide oxidation than the first catalyst material $C_1$.

2. A catalyst system according to claim 1,
**characterized in that**
the first catalyst material $C_1$ contains a mixture of copper and an oxide from a first metal $Me^1$, wherein $Me^1$ is selected from the group consisting of Mn, Ce, Zr, Al, Si, Sn, Ti, Zn, Fe, Co, Ni or mixtures thereof.

3. A catalyst system according to claim 1 or 2,
**characterized in that**
the second catalyst material $C_2$ contains a mixture of platinum and a second metal $Me^2$, whereas $Me^2$ is selected from the group consisting of Fe, Ru, Co, Rh, Ir, Ni and Pd or mixtures thereof.

4. A catalyst system according to one of the preceding claims,
**characterized in that**
the catalyst material $C_1$ is located upstream of the catalyst material $C_2$ with respect to the flow direction of the gas.

5. A catalyst system according to one of the preceding claims,
**characterized in that**
the catalyst materials are deposited on a honeycomb structure support.

6. A reactor for carbon monoxide removal in fuel cell feed gas comprising a catalyst system according to one of the preceding claims.

7. Method for carbon monoxide removal from a gas mixture which contains carbon monoxide and oxygen,
**characterized in that**
the gas mixture is brought into contact with a catalyst system or a reactor according to one of the preceding claims.

8. Method according to claim 7,
**characterized in that**
the $O_2$:CO-ratio of the fuel cell feed gas is from 2.0 to 0.5, especially from 1.5 to 0.7.

9. Method according to claim 7 or 8,
**characterized in that**
the catalyst system temperature is kept in a range from 80 to 220 °C, especially from 100 to 200 °C.

10. Method according to one of the claims 7 to 9,
**characterized in that**
the gas mixture flows continuously over the catalyst system or the reactor.

11. Method according to claim 10,
**characterized in that**
the space velocity of the gas mixture is lower for the first catalyst material $C_1$ than for the second catalyst material $C_2$.

12. Use of a catalyst system or a reactor according to one of the claims 1 to 6 for carbon monoxide removal from a gas mixture which contains carbon monoxide and oxygen.

**Amended claims in accordance with Rule 137(2) EPC.**

1. A catalyst system for carbon monoxide removal from hydrogen containing fuel cell feed gas comprising at least two locally separated catalyst materials $C_1$ and $C_2$,
wherein the first catalyst material $C_1$ shows at a temperature of 100°C a higher selectivity with respect to carbon monoxide oxidation than the second catalyst material $C_2$ and/or
the second catalyst material $C_2$ shows at a temperature of 100°C a higher conversion rate with respect to carbon monoxide oxidation than the first catalyst material $C_1$,

wherein the first catalyst material $C_1$ contains a mixture of copper and an oxide from a first metal $Me^1$, wherein $Me^1$ is selected from the group consisting of Mn, Ce or mixtures thereof and the second catalyst material $C_2$ contains a mixture of platinum and a second metal $Me^2$, whereas $Me^2$ is selected from the group consisting of Fe, Ru, Co, Rh, Ir, Ni and Pd or mixtures thereof.

**2.** A catalyst system according to claim 1,
**characterized in that**
the catalyst material $C_1$ is located upstream of the catalyst material $C_2$ with respect to the flow direction of the gas.

**3.** A catalyst system according to one of the preceding claims,
**characterized in that**
the catalyst materials are deposited on a honeycomb structure support.

**4.** A reactor for carbon monoxide removal in fuel cell feed gas comprising a catalyst system according to one of the preceding claims.

**5.** Method for carbon monoxide removal from a gas mixture which contains carbon monoxide and oxygen,
**characterized in that**
the gas mixture is brought into contact with a catalyst system or a reactor according to one of the preceding claims.

**6.** Method according to claim 5,
**characterized in that**
the $O_2$:CO-ratio of the fuel cell feed gas is from 2.0 to 0.5, especially from 1.5 to 0.7.

**7.** Method according to claim 5 or 6,
**characterized in that**
the catalyst system temperature is kept in a range from 80 to 220 °C, especially from 100 to 200 °C.

**8.** Method according to one of the claims 5 to 7,
**characterized in that**
the gas mixture flows continuously over the catalyst system or the reactor.

**9.** Method according to claim 8,
**characterized in that**
the space velocity of the gas mixture is lower for the first catalyst material $C_1$ than for the second catalyst material $C_2$.

**10.** Use of a catalyst system or a reactor according to one of the claims 1 to 4 for carbon monoxide removal from a gas mixture which contains carbon monoxide and oxygen.

**Fig. 1**

**Fig. 2a**

**Fig. 2b**

Fig. 3a

Fig. 3b

Fig. 4a

Fig. 4b

**European Patent Office**

**EUROPEAN SEARCH REPORT**

Application Number

EP 08 10 2761

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 256 545 A (MATSUSHITA ELECTRIC IND CO LTD [JP]) 13 November 2002 (2002-11-13)<br>* paragraphs [0119], [0120]; claim 2; examples 7,8 * | 1-12 | INV.<br>B01J23/889<br>B01J23/89<br>B01J35/00<br>B01J35/04 |
| Y | EP 1 110 907 A (MITSUBISHI GAS CHEMICAL CO [JP]) 27 June 2001 (2001-06-27)<br>* paragraphs [0004], [0005]; claims 1,2,10; example 1 * | 1-12 | B01D53/86<br>H01M8/06<br>C01B3/58 |
| Y | SALKER A V ET AL: "ELECTRONIC AND CATALYTIC STUDIES ON CO1-XCUXMN2O4 FOR CO OXIDATION"<br>JOURNAL OF MATERIALS SCIENCE, SPRINGER / BUSINESS MEDIA, DORDRECHT, NL,<br>vol. 35, no. 18,<br>15 September 2000 (2000-09-15), pages 4713-4719, XP001066150<br>ISSN: 0022-2461<br>* the whole document * | 1-12 | |

TECHNICAL FIELDS SEARCHED (IPC)

B01J
B01D
H01M
C01B

The present search report has been drawn up for all claims

| Place of search | Date of completion of the search | Examiner |
|---|---|---|
| The Hague | 8 August 2008 | Veefkind, Victor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                

& : member of the same patent family, corresponding document

EPO FORM 1503 03.82 (P04C01)

**ANNEX TO THE EUROPEAN SEARCH REPORT
ON EUROPEAN PATENT APPLICATION NO.**                     EP 08 10 2761

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2008

| Patent document cited in search report | | Publication date | Patent family member(s) | | Publication date |
|---|---|---|---|---|---|
| EP 1256545 | A | 13-11-2002 | CN | 1413166 A | 23-04-2003 |
| | | | WO | 0147802 A1 | 05-07-2001 |
| | | | US | 2003003033 A1 | 02-01-2003 |
| EP 1110907 | A | 27-06-2001 | DE | 60036681 T2 | 17-07-2008 |
| | | | US | 2001004453 A1 | 21-06-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007106664 A2

- WO 2006130574 A